# EUROPÄISCHE PATENTSCHRIFT

(11) **EP 2 882 689 B1**
(45) Veröffentlichungstag und Bekanntmachung des Hinweises auf die Patenterteilung: **07.09.2016**
(21) Anmeldenummer: 13737272.8
(22) Anmeldetag: 17.07.2013
(51) Int. Cl.: C01G 49/02, C09C 1/24, C01G 49/00

(54) **EISEN-SILICIUM-OXIDPARTIKEL MIT VERBESSERTER AUFHEIZGESCHWINDIGKEIT**
IRON-SILICON OXIDE PARTICLES HAVING AN IMPROVED HEATING RATE
PARTICULES D'OXYDE DE FER ET DE SILICIUM AYANT UNE VITESSE D'ÉCHAUFFEMENT AMÉLIORÉE

(30) Priorität: 07.08.2012 DE 102012213986
(43) Veröffentlichungstag der Anmeldung: 17.06.2015
(73) Patentinhaber: Evonik Degussa GmbH, 45128 Essen (DE)
(72) Erfinder: KATUSIC, Stipan, 65812 Bad Soden (DE); ALFF, Harald, 63796 Kahl (DE); ALBERS, Peter, 63450 Hanau (DE); HERZOG, Harald, 63791 Karlstein (DE); KRESS, Peter, 63791 Karlstein (DE)
(86) Internationale Anmeldenummer: PCT/EP2013/065063
(87) Internationale Veröffentlichungsnummer: WO 2014/023540

(56) Entgegenhaltungen:
- EP-A1- 1 243 552
- EP-A1- 2 000 439
- DE-A1-102008 044 384

## Beschreibung

Die Erfindung betrifft Eisen-Silicium-Oxidpartikel mit verbesserter Aufheizgeschwindigkeit im magnetischen Feld, deren Herstellung und deren Verwendung.

EP1243552 offenbart Oxidpartikel mit einem Kern, einer im Kern verteilten Dotierkomponente und einer den Kern umgebenden Hülle, wobei Kern, Dotierung und Hülle chemisch unterschiedlich zusammengesetzt sind, z.B. Kern aus Eisenoxid, Hülle aus amorphem SiO₂ und diverse Dotierelemente wie Al oder Zn.

In WO03/042315 wird die Verwendung von Eisen-Silicium-Oxidpartikeln zum induktiven Erwärmen von Adhäsivverbunden beschrieben. Die Partikel können entweder über Sol-Gel-Routen oder durch Flammenpyrolyse erhalten werden.

In der WO 2010/063557 werden Eisen-Silicium-Oxidpartikel offenbart, die zur induktiven Erwärmung eingesetzt werden können. Die Partikel weisen eine Kern-Hülle-Struktur auf, mit den Eisenoxidphasen Hämatit, Magnetit und Maghemit als Kern und einer amorphen Hülle aus Siliciumdioxid. Die Partikel werden hergestellt, indem man ein Gemisch aus Siliciumverbindungen, von denen eine Monosilan ist, und einer Eisenverbindung in einer Wasserstoff-/Sauerstoffflamme umsetzt.

In EP-A-2000439 werden dotierte Eisen-Silicium-Oxidpartikel mit einer Kern-Hülle-Struktur offenbart, wobei sich die Auswahl der Dotierkomponenten auf solche beschränkt, die magnetische Eigenschaften besitzen. Zudem weisen die Partikel einen recht hohen Chloridgehalt auf. Die Partikel werden durch Flammenpyrolyse erhalten, wobei reduzierend wirkende Gase in verschiedene Reaktionszonen eingebracht werden.

In WO2012/048985 werden mit Siliciumdioxid umhüllte nadelförmige Eisenoxidpartikel offenbart, die mit P, Si, Al, Mg, Co, K oder Cr dotiert sein können. Es werden keine Mengenangaben und keine Angaben zu den Verbindungen gemacht, die eingesetzt werden können. Die Dotierung dient der Beeinflussung von Partikelgröße und Form. Es ist nicht bekannt, in welcher chemischen Form und an welcher Stelle der Partikel, Kern und/oder Hülle, die Dotierkomponente eingebaut wird.

Die im Stand der Technik genannten Dokumente offenbaren die Verwendung von Eisen-Silicium-Oxidpartikeln zum induktiven Aufheizen in einem magnetischen oder elektromagnetischen Wechselfeld. Obwohl die Aufheizzeiten deutlich verbessert werden konnten, bleibt es das Ziel die Aufheizzeiten weiter zu reduzieren. Es war daher die Aufgabe der vorliegenden Erfindung ein Material bereitzustellen, mit dem dieses Ziel erreicht werden kann.

Gegenstand der Erfindung sind Kern-Hülle-Partikel, die kristallines Eisenoxid im Kern und amorphes Siliciumdioxid in der Hülle enthalten
dadurch gekennzeichnet, dass
a) die Hülle 5 bis 40 Gew.-% Siliciumdioxid enthält,
b) der Kern
   b1) 60 bis 95 Gew.-% Eisenoxid und
   b2) 0,5 bis 5 Gew.-%, wenigstens einer Dotierkomponente ausgewählt aus der Gruppe bestehend aus Aluminium, Calcium, Kupfer, Magnesium, Silber, Titan, Yttrium, Zink, Zinn und Zirkon enthält,
c) wobei die Angaben zu Gew.-% sich auf die Kern-Hülle-Partikel beziehen und die Summe aus a) und b) wenigstens 98 Gew.-%, bevorzugt wenigstens 99 Gew.-%, der Kern-Hülle-Partikel beträgt,
d) der Kern Netzebenenabstände von 0,20 nm, 0,25 nm und 0,29 nm, jeweils +/- 0,02 nm, bestimmt mittels hochauflösender Transmissions-Elektronenmikroskopie (HR-TEM), aufweist.

Die erfindungsgemäßen Partikel liegen weitgehend in Form isolierter Einzelpartikel vor. Die Einzelpartikel weisen eine weitestgehend sphärische bis knollenförmige Form auf. Nadelförmige Partikel werden nicht gefunden. Neben den isolierten Einzelpartikeln könn en auch dreidimensionale Aggregate dieser Partikel vorliegen. In diesen Aggregaten sind die Einzelpartikel fest miteinander verwachsen. Der Anteil der Aggregate beträgt weniger als 50 Gew.-%, bevorzugt weniger als 20 Gew.-%, bezogen auf die Summe von Einzelpartikeln und Aggregaten. Die Bestimmung beispielsweise durch Bildauswertung von TEM-Aufnahmen mittels geeigneter Software erfolgen, wie dies schon für andere magnetische Kern-Hülle-Partikel bekannt ist.

Die BET-Oberfläche der erfindungsgemäßen Partikel beträgt in der Regel 5 bis 40 m²/g, bevorzugt 10 bis 25 m²/g.

Die Hülle der erfindungsgemäßen Partikel enthält oder besteht zu wenigstens aus 95 Gew.-%, bevorzugt aus wenigstens 98 Gew.-%, aus amorphem Siliciumdioxid. Unter amorph wird ein Material verstanden, bei dem mit den üblichen Methoden der Röntgendiffraktometrie keine Beugungssignale erfasst werden können. Bei der Hülle handelt es sich um eine dichte Hülle. Unter dicht ist zu verstehen, dass bei 12 stündigem Kontakt der Partikel bei 60°C mit Salzsäure weniger als 300 ppm Eisen, Wasserstoffperoxid weniger als 10 ppm Eisen oder einer NaCl/CaCl₂-Lösung weniger als 50 ppm Eisen nachweisbar sind. Die Dicke der äußeren Hülle beträgt bevorzugt 1 bis 40 nm, besonders bevorzugt 5 bis 20 nm. Die Dicke der Hülle kann beispielsweise durch Auswertung HR-TEM-aufnahmen bestimmt werden.

Bei dem sich im Kern der erfindungsgemäßen Partikel befindlichen kristallinen Eisenoxid kann es sich um Magnetit, Maghemit und Hämatit als Hauptkomponenten handeln. Die genannten Netzebenenabstände korrespondieren mit diesen Eisenoxidmodifikationen. So umfasst der Netzebenenabstand von 0,20 nm und 0,29 nm Maghemit und Magnetit, während der Netzebenenabstand von 0,25 nm mit Maghemit, Magnetit und Hämatit korrespondiert. Es werden im HR-TEM keine Netzebenenabstände detektiert die der Dotierkomponente zuzuordnen wären.

Auch mittels Röntgendiffraktometrie kann durch Röntgendiffraktometrie können keine der Dotierkomponente zuordenbare Parameter detektiert werden. Es ist davon auszugehen, dass die Dotierkomponente in das Gitter der sich im Kern der Partikel befindlichen Eisenoxidmodifikation eingebaut ist.

Die bevorzugten Dotierkomponente ist wenigstens eine ausgewählt aus der Gruppe bestehend aus Aluminium, Calcium, Kupfer, Magnesium, Zink und Zinn. Die besten Ergebnisse werden mit Aluminium oder Zink als Dotierkomponente erhalten. Der Anteil dieser Dotierkomponenten beträgt bevorzugt 1 bis 2 Gew.-%, bezogen auf die Kern-Hülle-Partikel. Es wurde gefunden, dass größere Anteile dieser Dotierkomponenten nicht zu einer Verkürzung der Aufheizzeiten führt.

Der Kern der erfindungsgemäßen Kern-Hülle-Partikel weist bevorzugt ein Verhältnis (Magnetit + Maghemit)/Hämatit von 70:30 bis 95:5 und ein Verhältnis von Magnetit/Maghemit von 50:50 bis 90:10. Mit diesen Verhältnissen werden die besten Aufheizzeiten erzielt. Die Zusammensetzung des Kernes bezogen auf Maghemit, Magnetit und Hämatit kann bestimmt werden, so kann dies durch Röntgendiffraktometrie unter Verwendung von Co-K_{α}-Strahlung in einem Winkelbereich 20 von 10 - 100° erfolgen. Damit ist Maghemit signifikant anhand der Reflexe (110) und (211) im vorderen Winkelbereich nachweisbar. Der Hämatit ist wegen der freistehenden Reflexe eindeutig identifizierbar. Die quantitative Phasenanalyse wird mit Hilfe der Rietveld- Methode ausgeführt, Fehler ca. 10% relativ.

Die erfindungsgemäßen Kern-Hülle-Partikel können in einer Grenzschicht zwischen Kern und Hülle eine oder mehrere, die Elemente Eisen, Silicium und Sauerstoff aufweisende Verbindungen enthalten, die im HR-TEM einen Abstand der Gitternetzebenen von 0,31 +/- 0,01 nm aufweisen.

Dies kann mit XPS-ESCA-Analyse (XPS = Röntgen-Photoelektronen-Spektroskopie; ESCA = Electron Spectroscopy for Chemical Analysis) und TEM-EDX-Analyse (Transmissionselektronenmikroskopie [TEM] in Verbindung mit einer energiedispersiven Analyse charakteristischer Röntgenstrahlen [EDX]), bestimmt werden. Diese Verbindungen können in Form einer weiteren Hülle, neben Siliciumdioxid, den Kern umgeben. Die Dicke dieser Hülle beträgt 0,5 bis 2 nm. Diese Hülle stellt einen Übergangsbereich zwischen amorpher Siliciumdioxidhülle und kristallinem Eisenoxidkern dar, der zu einer ausgezeichneten Adaption zwischen Kern und äußerer Hülle führt. Es wird derzeit davon ausgegangen, dass der Phononentransport und damit die Wärmeleitung von Kern zu äußerer Hülle durch diesen intensiven Verbund verbessert wird, was in der Anwendung der erfindungsgemäßen Partikel zu substantiell höheren Aufheizraten führen kann.

Die erfindungsgemäßen Partikel weisen zudem auf ihrer Oberfläche Hydroxylgruppen auf. Diese können mit anorganischen und organischen Mitteln zur Oberflächenmodifizierung unter Bildung einer Van-der-Waals-Wechselwirkung, einer ionischen oder kovalenten Bindung reagieren. Geeignete mittel zur Oberflächenmodifizierung können beispielsweise Alkoxysilane, Carbonsäuren, Nucleinsäuren oder Polysaccharide sein.

Ein weiterer Gegenstand der Erfindung ist ein Verfahren zur Herstellung der Kern-Hülle-Partikel bei dem man
a) in einer ersten Zone (Zone 1) eines Durchflussreaktors ein Gemisch enthaltend
   a1) ein Aerosol erhalten durch das Verdüsen einer Lösung enthaltend jeweils ein oder mehrere oxidierbare und/oder hydrolysierbare Eisenverbindungen und jeweils ein oder mehrere Dotierstoffe ausgewählt aus der Gruppe bestehend aus Aluminium, Calcium, Kupfer, Magnesium, Silber, Titan, Yttrium, Zink, Zinn und Zirkon,
   a2) ein oder mehrere wasserstoffhaltige Brenngase und
   a3) ein oder mehrere Sauerstoff enthaltende Gase
   zündet und abreagieren lässt,
b) in einer zweiten Zone (Zone 2) des Durchflussreaktors zu diesem Reaktionsgemisch ein oder mehrere, hydrolysierbare und/oder oxidierbare Siliciumverbindungen gibt,
c) nachfolgend das Reaktionsgemisch gegebenenfalls kühlt und den Feststoff von gas- oder dampfförmigen Stoffen abtrennt und
d) gegebenenfalls den Feststoff anschließend mit einem Mittel zur Oberflächenmodifizierung behandelt.

Die Reaktionsbedingungen können bevorzugt so gewählt sein, dass in Zone 1 die mittlere Verweilzeit 10 ms bis 1 s, besonders bevorzugt 300 bis 600 ms, und die Temperatur bevorzugt 800 bis 1300°C, besonders bevorzugt 950 - 1100°C, und in Zone 2 die mittlere Verweilzeit 0,1 bis 10 s, besonders bevorzugt 1 bis 3 s und die Temperatur bevorzugt 400 bis 900 °C, besonders bevorzugt 700 bis 850°C, ist. In Zone 1 erfolgt die Temperaturmessung 50 cm unter dem Zündungspunkt, in Zone 2 15 cm oberhalb der obersten Zugabestelle in Zone 2.

Die Siliciumverbindung wird bevorzugt aus der Gruppe bestehend aus SiCl₄, CH₃SiCl₃, (CH₃)₂SiCl₂, (CH₃)₃SiCl, HSiCl₃, (CH₃)₂HSiCl und CH₃C₂H₅SiCl₂, H₄Si, Si(OC₂H₅)₄ und/oder Si(OCH₃)₄, ausgewählt. Besonders bevorzugt wird SiCl₄ und/oder Si(OC₂H₅)₄ eingesetzt.

Die Eisenverbindung wird bevorzugt als Aerosol eingebracht. In der Regel erfolgt die Aerosolbildung aus einer wässerigen Lösung unter Verwendung eines Zerstäubungsgases wie beispielsweise Luft oder Stickstoff und einer Zwei- oder Mehrstoffdüse. Der mittlere Tropfendurchmesser ist bevorzugt kleiner 100 µm, besonders bevorzugt kleiner 50 µm. Als Eisenverbindung wird bevorzugt Eisen(II)chlorid eingesetzt.

In einer besonderen Ausführungsform der Erfindung kann in Zone 2 zusätzlich noch Wasser oder Wasserdampf eingebracht werden. Dabei wird das Wasser oder der Wasserdampf getrennt von der Siliciumverbindung eingebracht, bevorzugt entweder kurz vor oder auf Höhe der Einspeisestelle der Siliciumverbindung. Bevorzugt wird ein molarer Überschuss an Wasser beziehungsweise Wasserdampf verwendet. Besonders bevorzugt kann ein molares Verhältnis Wasser/Siliciumverbindung von 10 - 100 sein.

Als Brenngase können bevorzugt Wasserstoff, Methan, Ethan und/oder Propan eingesetzt werden. Besonders bevorzugt ist Wasserstoff. Als Sauerstoff enthaltendes Gas wird hauptsächlich Luft oder mit Sauerstoff angereicherte Luft eingesetzt. In der Regel wird ein Überschuss an Sauerstoff gegenüber Wasserstoff eingesetzt. Lambda, der Quotient aus Brennstoffmenge zu Sauerstoffmenge, beträgt bevorzugt 1,05 -1,50.

Geeignete Mittel zur Modifizierung der Oberfläche sind Organosilane, Silazane oder Polysiloxane. Gewöhnlich werden diese mittel auf die Kern-Hülle-Partikel gesprüht und anschließend bei Temperaturen von 120 bis 200°C, vorzugsweise unter Schutzgasatmosphäre, über einen Zeitraum von 1 bis 5 Stunden behandelt.

Ein weiterer Gegenstand der Erfindung ist ein Silikonkautschuk enthaltend die erfindungsgemäßen Eisen-Silicium-Oxidpartikel. Der Anteil an diesen Partikeln beträgt bevorzugt 0,5 - 15 Gew.-% und besonders bevorzugt 3 - 6 Gew.-%.

Ein weiterer Gegenstand der Erfindung ist die Verwendung der erfindungsgemäßen Eisen-Silicium-Oxidpartikel als Bestandteil von Kautschukmischungen, von Polymerzubereitungen, von Klebstoffzusammensetzungen, von durch Schweißen im elektromagnetischen Wechselfeld erhältlichen Kunststoffverbundformkörpern und zur Herstellung von Dispersionen.

### Beispiele

### Analytik

Zur Bestimmung des Eisenoxidgehaltes wurde die Probe in der Labormühle homogenisiert und nach Schmelzaufschluss titrimetrisch bestimmt. Es wurde der Fe(III)-Gehalt bestimmt und der Fe2O3-Gehalt daraus berechnet. Der Gehalt an Si wird mittels ICP-OES ermittelt und anschließend als Oxid berechnet. Der Gehalt an Dotierkomponente wird nach Lösen in Mineralsäure durch ICP-OES bestimmt und in Oxidgehalte umgerechnet.

Die BET-Oberfläche wird bestimmt nach DIN 66131.

Die Bestimmung der Kernanteile erfolgt durch Röntgendiffraktometrie. (Reflexion, θ/θ- Diffraktometer, Co-Kα, U = 40kV, I = 35mA; Szintillationszähler, nachgestellter Graphitmonochromator; Winkelbereich (2Θ)/ Schrittweite/ Meßzeit: 10 - 100° / 0,04° / 6s (4h)). Mit Hilfe der Rietveld- Methode wird eine quantitative Phasenanalyse ausgeführt (Fehler ca. 10% relativ). Die quantitative Phasenanalyse erfolgt anhand des set 60 der ICDD-Datenbank PDF4+ (2010). Die Phasenanalyse und die Kristallitgrößenbestimmung erfolgen mit dem Rietveld-Programm SiroQuant®, Version 3.0 (2005).

Die Dicke der Schale wird mittels hochauflösenderTransmisions-ElektronenMikroskopie (HR-TEM) bestimmt.

Die Aufheizzeit von 20°C auf 200°C wird in einer Silikonmasse bestimmt. Die Silikonmasse wird erhalten, indem man 33 g ELASTOSIL® E50, Fa. Momentive Performance Materials, 13 g Silikonöl Typ M 1000, Fa. Momentive Performance Materials, 4 g AEROSIL®150, Fa. Evonik und 2,5 g, entsprechend 4,76 Gew.-%, Kern-Hülle-Partikel mittels eines SpeedMixers 2 x 30 s und 2 x 45 s bei 3000 U/min vermengt. Nachfolgend wird die Silikonmasse in einer Dicke von ca. 1 mm auf einen Glasobjektträger aufgebracht. Der Energieeintrag erfolgt durch Induktion mittels einer wassergekühlten Spule mit einem Durchmesser von 80 mm. Die Frequenz beträgt 510 KHz, die Leistung ca. 12 KW, Fives Celes GTMC 25 KW, Frankreich.

Auslaugetest: 0,33 g Kern-Hülle-Partikel in 20ml HCl (1 mol/l) oder H₂O₂ (0,5 mol/l) oder einer Lösung von 8 Gew.-% NaCl und 2 Gew.-% CaCl₂ in Wasser werden über einen Zeitraum von 12 Stunden bei 60°C gelagert. Ein Teil der Lösung wird anschließend mittels geeigneter Analysetechniken, beispielsweise ICP (inductively coupled plasma spectroscopy), auf Eisen untersucht.

Beispiel 1: Ein Aerosol, welches durch Verdüsen von 4500 g/h einer wässerigen Lösung bestehend aus 26,1 g Eisen-(II)-Chlorid, 1,3 g Zinknitrat und 72,6 g Wasser, jeweils pro 100 g Lösung werden und 3,0 kg/h Stickstoff werden mittels einer Zweistoffdüse verdüst. Das so erhaltene Aerosol wird mit 8,8 Nm³/h Wasserstoff und 19 Nm³/h Luft, davon 15 Nm³/h Primärluft und 4 Nm³/h Sekundärluft, in einer ersten Zone zur Reaktion gebracht. Die mittlere Verweilzeit des Reaktionsgemisches in der ersten Zone beträgt ca. 540 ms. In den Strom des Reaktionsgemisches aus der ersten Zone wird ein Gemisch aus 410 g/h dampfförmigem Si(OC₂H₅)₄ und 4 Nm³/h Stickstoff sowie separat 2,5 kg/h Wasserdampf gegeben. Die mittlere Verweilzeit des Reaktionsgemisches in der zweiten Zone beträgt 1,7 s. Nachfolgend wird das Reaktionsgemisch abgekühlt und der erhaltene Feststoff auf einem Filter von den gasförmigen Stoffen abgeschieden.

Die Beispiele 2 bis 10 werden analog durchgeführt. Einsatzstoffe und Bedingungen sind in Tabelle 1 wiedergegeben. die physikalisch-chemischen Eigenschaften der Kern-Hülle-Partikel werden in Tabelle 2 wiedergegeben.

Als Vergleichsbeispiel wird das Pulver des Beispieles 6 aus EP-A-2000439 herangezogen. Hierbei handelt es sich um ein mit 1,8 Gew.-% Mangan dotiertes Eisen-Silicium-Mischoxidpulver. Die Aufheizzeit von 20°C auf 200°C beträgt 15 s.

Als weiteres Vergleichsbeispiel wird das Pulver des Beispieles 10 aus WO 2012/048985 herangezogen. Hierbei handelt es sich um ein mit 1,8 Gew.-% Phosphor dotiertes Eisen-Silicium-Mischoxidpulver. Die Aufheizzeit von 20°C auf 200°C beträgt 17 s.

Die erfindungsgemäßen Kern-Hülle-Partikel weisen deutlich kürzere Aufheizzeiten auf, als Pulver nach dem Stand der Technik.

**Tabelle 1: Einsatzstoffe und Mengen**

| | **Reaktionszone I (RZ I)** | | | | | | | **Reaktionszone II (RZ II)** | | |
|---|---|---|---|---|---|---|---|---|---|---|
| | **Dotierstoff** | | **Eisenchlorid** | **Wasser** | **Durchsatz** | **t_{RZ1}^{a)}** | **T_{RZ1}** | **TEOS** | **t_{RZ2}** | **T_{RZ2}** |
| **Bspl.** | | g/100g | | | g/h | ms | °C | g/h | s | °C |
| **1** | Zn(NO₃)₂ | 1,3 | 26,1 | 72,6 | 4500 | 540 | 979 | 410 | 1,7 | 808 |
| **2** | | 2,7 | 26,7 | 70,6 | 4000 | 543 | 971 | 360 | 1,8 | 860 |
| **3** | | 2,2 | 27,3 | 70,5 | 4500 | 519 | 1056 | 430 | 1,6 | 803 |
| **4** | | 2,0 | 27,7 | 70,3 | 4400 | 546 | 950 | 430 | 1,7 | 850 |
| **5** | Al(NO₃)₃ | 7,1 | 21,0 | 71,9 | 4500 | 525 | 1032 | 430 | 1,6 | 849 |
| **6** | | 3,7 | 25,3 | 71,0 | 4500 | 520 | 1053 | 430 | 1,7 | 847 |
| **7** | | 3,1 | 26,1 | 70,8 | 4500 | 526 | 1027 | 400 | 1,8 | 825 |
| **8** | MgCl₂ | 8,8 | 19,4 | 71,8 | 4500 | 540 | 986 | 410 | 1,7 | 840 |
| **9** | Cu(NO₃)₂ | 3,4 | 25,7 | 70,9 | 4500 | 528 | 1003 | 430 | 1,7 | 837 |
| **10** | CaCl₂ | 2,2 | 27,6 | 70,2 | 4500 | 530 | 998 | 430 | 1,5 | 835 |
| **11** | Y(NO₃)₂ | 1,3 | 26,1 | 72,6 | 4500 | 545 | 989 | 410 | 1,7 | 810 |
| **12** | Ag(NO₃)₂ | 2,0 | 27,7 | 70,3 | 4500 | 560 | 980 | 410 | 1,8 | 830 |
| **13** | Zr(NO₃)₂ | 2,2 | 27,6 | 70,2 | 4500 | 540 | 980 | 425 | 1,7 | 845 |
| **14** | TiCl₄ | 3,4 | 25,7 | 70,9 | 4500 | 541 | 985 | 425 | 1,8 | 840 |
| **15** | C₁₀H₁₄O₅Ti | 4,0 | 26,0 | 70,0 | 4500 | 530 | 1000 | 430 | 1,7 | 846 |

**Tabelle 2: Stoffparameter**

| **Beispiel** | | **1** | **2** | **3** | **4** | **5** | **6** | **7** | **8** | **9** | **10** | **11** | **12** | **13** | **14** | **15** |
|---|---|---|---|---|---|---|---|---|---|---|---|---|---|---|---|---|
| Dotierkomponente | | Zn | | | | Al | | | Mg | Cu | Ca | Y | Ag | Zr | Ti | Ti |
| Siliciumdioxid | Gew.-% | 15,0 | 14,1 | 14,5 | 14,3 | 14,0 | 14,6 | 14,3 | 14,5 | 14,1 | 13,6 | 14,5 | 14,0 | 14,6 | 14,5 | 13,9 |
| Eisenoxid | Gew.-% | 80,8 | 84,2 | 84,1 | 84,5 | 83,7 | 83,9 | 84,5 | 81,8 | 83,5 | 83,4 | 84,1 | 83,7 | 84,0 | 84,1 | 83,4 |
| Dotierkomponente | Gew.-% | 4,2 | 1,8 | 1,4 | 1,2 | 2,3 | 1,5 | 1,3 | 3,8 | 2,4 | 3,0 | 1,4 | 2,3 | 1,6 | 1,4 | 2,7 |
| Eisenoxide aus XRD^{a)} | | | | | | | | | | | | | | | | |
| (Magn.+Magh.)/Häm. | | - | 70:30 | 76:24 | - | - | 85:15 | 82:18 | - | 87:13 | - | 85:15 | 76:24 | 85:15 | 82:18 | - |
| (Magn./Magh.) | | - | 57:43 | 68:32 | - | - | 65:35 | 65:35 | - | 83:17 | - | 83:17 | 70:30 | 66:34 | 70:30 | - |
| BET-Oberfläche | m²/g | 9 | 13 | 13 | 14 | 11 | 14 | 14 | 13 | 13 | 11 | 17 | 18 | 19 | 20 | 19 |
| Sättigungsmagnetisierung | Am²/kg | 66,7 | - | 61,7 | - | - | 54,6 | - | 66,1 | 66,6 | 65,4 | 61,6 | 60,0 | 65,4 | 61,7 | 66,7 |
| Aufheizzeit 20 -> 200°C | s | 8,2 | 9,2 | 5,4 | 5,5 | 6,4 | 6,2 | 5,6 | 6,0 | 6,2 | 8,2 | 6,2 | 5,0 | 5,4 | 7,0 | 6,0 |
| Fe in Lösung | | | | | | | | | | | | | | | | |
| HCl | ppm | 60 | - | 240 | 130 | 126 | 131 | 137 | - | 120 | 100 | 50 | 55 | 60 | 40 | 60 |
| H₂O₂ | | 3 | 2 | 2,8 | 3 | 2 | 2 | - | 3 | 3 | 3 | 3 | 2 | 5 | 4 | 7 |
| NaCl, CaCl₂ | | - | - | 4,5 | 16 | 11 | 17 | 21 | - | - | - | 20 | 21 | 23 | 15 | 21 |

| | | | | | | | | | | | | | | | | |
|---|---|---|---|---|---|---|---|---|---|---|---|---|---|---|---|---|
| a) Magn. = Magnetit; Magh. = Maghemit; Häm. = Hämatit, | | | | | | | | | | | | | | | | |

## Patentansprüche

1. Kern-Hülle-Partikel, die kristallines Eisenoxid im Kern und amorphes Siliciumdioxid in der Hülle enthalten
**dadurch gekennzeichnet, dass**
a) die Hülle 5 bis 40 Gew.-% Siliciumdioxid enthält,
b) der Kern
b1) 60 bis 95 Gew.-% Eisenoxid und
b2) 0,5 bis 5 Gew.-%, wenigstens einer Dotierkomponente ausgewählt aus der Gruppe bestehend aus Aluminium, Calcium, Kupfer, Magnesium, Silber, Titan, Yttrium, Zink, Zinn und Zirkon enthält,
c) wobei die Angaben zu Gew.-% sich auf die Kern-Hülle-Partikel beziehen und die Summe aus a) und b) wenigstens 98 Gew.-% der Kern-Hülle-Partikel beträgt,
d) der Kern Netzebenenabstände von 0,20 nm, 0,25 nm und 0,29 nm, jeweils +/- 0,02 nm, bestimmt mittels hochauflösender Transmissions-Elektronenmikroskopie, aufweist.

2. Kern-Hülle-Partikel Struktur nach Anspruch 1,
**dadurch gekennzeichnet, dass**
durch Röntgendiffraktometrie oder HR-TEM keine der Dotierkomponente zuordenbare Parameter detektierbar sind.

3. Kern-Hülle-Partikel nach den Ansprüchen 1 oder 2,
**dadurch gekennzeichnet, dass**
die Dotierkomponente Aluminium oder Zink ist.

4. Kern-Hülle-Partikel nach den Anspruch 3,
**dadurch gekennzeichnet, dass**
der Anteil an Dotierkomponente 1 bis 2 Gew.-%, bezogen auf die Kern-Hülle-Partikel, ist.

5. Kern-Hülle-Partikel nach den Ansprüchen 1 bis 4,
**dadurch gekennzeichnet, dass**
das mittels Röntgendiffraktometrie bestimmte Verhältnis von (Magnetit + Maghemit) zu Hämatit gleich 70:30 bis 95:5 und von Magnetit zu Maghemit gleich 50:50 bis 90:10 ist.

6. Kern-Hülle-Partikel nach den Ansprüchen 1 bis 5,
**dadurch gekennzeichnet, dass** sich
zwischen Kern und Hülle eine oder mehrere, die Elemente Eisen, Silicium und Sauerstoff enthaltende Verbindungen befinden, die im HR-TEM einen Abstand der Gitternetzebenen von 0,31 +/- 0,01 nm aufweisen.

7. Kern-Hülle-Partikel nach den Ansprüchen 1 bis 6,
**dadurch gekennzeichnet, dass**
sie durch Adsorption, Reaktion an der Oberfläche oder Komplexierung von beziehungsweise mit anorganischen und organischen Reagentien modifiziert sind.

8. Verfahren zur Herstellung der Kern-Hülle-Partikel nach den Ansprüchen 1 bis 7, **dadurch gekennzeichnet, dass** man
a) in einer ersten Zone eines Durchflussreaktors ein Gemisch enthaltend
a1) ein Aerosol erhalten durch das Verdüsen einer Lösung enthaltend jeweils ein oder mehrere oxidierbare und/oder hydrolysierbare Eisenverbindungen und jeweils ein oder mehrere Dotierstoffe ausgewählt aus der Gruppe bestehend aus Aluminium, Calcium, Kupfer, Magnesium, Silber, Titan, Yttrium, Zink, Zinn und Zirkon,
a2) ein oder mehrere wasserstoffhaltige Brenngase und
a3) ein oder mehrere Sauerstoff enthaltende Gase
zündet und abreagieren lässt,
b) in einer zweiten Zone des Durchflussreaktors zu diesem Reaktionsgemisch ein oder mehrere, hydrolysierbare und/oder oxidierbare Siliciumverbindungen gibt,
c) nachfolgend das Reaktionsgemisch gegebenenfalls kühlt und den Feststoff von gas- oder dampfförmigen Stoffen abtrennt und
d) gegebenenfalls den Feststoff anschließend mit einem Mittel zur Oberflächenmodifizierung behandelt.

9. Verfahren nach Anspruch 8,
**dadurch gekennzeichnet, dass**
in Zone 1 die mittlere Verweilzeit 10 ms bis 1 s und die Temperatur 800 bis 1300°C ist und in Zone 2 die mittlere Verweilzeit 0,1 bis 10 s und die Temperatur 400 bis 900 °C ist.

10. Verfahren nach den Ansprüchen 8 oder 9,
**dadurch gekennzeichnet, dass**
die Siliciumverbindung aus der Gruppe bestehend aus SiCl₄, CH₃SiCl₃, (CH₃)₂SiCl₂, (CH₃)₃SiCl, HSiCl₃, (CH₃)₂HSiCl und CH₃C₂H₅SiCl₂, H₄Si, Si(OC₂H₅)₄ und/oder Si(OCH₃)₄, ausgewählt ist.

11. Verfahren nach den Ansprüchen 8 bis 10,
**dadurch gekennzeichnet, dass**
in Zone 2 zusätzlich Wasser oder Wasserdampf eingebracht wird.

12. Verfahren nach den Ansprüchen 8 bis 11,
**dadurch gekennzeichnet, dass** das Mittel zur Modifizierung der Oberfläche ein Organosilan, ein Silazan oder ein Polysiloxan ist.

13. Silikonkautschuk enthaltend die Kern-Hülle-Partikel gemäß der Ansprüche 1 bis 7.

14. Verwendung der Kern-Hülle-Partikel gemäß den Ansprüchen 1 bis 7 als Bestandteil von Kautschukmischungen, als Bestandteil von Polymerzubereitungen, als Bestandteil von KlebstoffZusammensetzungen, als Bestandteil von durch Schweißen im elektromagnetischen Wechselfeld erhältlichen Kunststoffverbundformkörpern, zur Herstellung von Dispersionen und zur Immobilisierung von Enzymen.

## Claims

1. Core-shell particles containing crystalline iron oxide in the core and amorphous silicon dioxide in the shell, **characterized in that**
a) the shell contains from 5 to 40% by weight of silicon dioxide,
b) the core contains
b1) from 60 to 95% by weight of iron oxide and
b2) from 0.5 to 5% by weight of at least one doping component selected from the group consisting of aluminium, calcium, copper, magnesium, silver, titanium, yttrium, zinc, tin and zirconium,
c) where the % by weight indicated are based on the core-shell particles and the sum of a) and b) is at least 98% by weight of the core-shell particles,
d) the core has lattice plane spacings of 0.20 nm, 0.25 nm and 0.29 nm, in each case +/- 0.02 nm, determined by means of high resolution transmission electron microscopy.

2. Core-shell particle structure according to Claim 1, **characterized in that** no parameters which can be assigned to the doping component can be detected by X-ray diffraction or HR-TEM.

3. Core-shell particles according to Claim 1 or 2, **characterized in that** the doping component is aluminium or zinc.

4. Core-shell particles according to Claim 3, **characterized in that** the proportion of doping component is from 1 to 2% by weight, based on the core-shell particles.

5. Core-shell particles according to any of Claims 1 to 4, **characterized in that** the ratio of (magnetite + maghemite) to haematite determined by means of X-ray diffraction is from 70:30 to 95:5 and that of magnetite to maghemite is from 50:50 to 90:10.

6. Core-shell particles according to any of Claims 1 to 5, **characterized in that** one or more compounds which contain the elements iron, silicon and oxygen and in the HR transmission electron micrograph have a spacing of the lattice planes of 0.31 +/- 0.01 nm are present between core and shell.

7. Core-shell particles according to any of Claims 1 to 6, **characterized in that** they have been modified by adsorption, reaction on the surface or complexation of or with inorganic and organic reagents.

8. Process for producing the core-shell particles according to any of Claims 1 to 7, **characterized in that**
a) a mixture containing
a1) an aerosol obtained by atomization of a solution containing in each case one or more oxidizable and/or hydrolysable iron compounds, and in each case one or more dopants selected from the group consisting of aluminium, calcium, copper, magnesium, silver, titanium, yttrium, zinc, tin and zirconium,
a2) one or more hydrogen-containing fuel gases and
a3) one or more oxygen-containing gases is ignited and allowed to react in a first zone of a
flow reactor,
b) one or more hydrolysable and/or oxidizable silicon compounds are added to this reaction mixture in a second zone of the flow reactor,
c) the reaction mixture is then optionally cooled and the solid is separated from materials in gaseous or vapour form and
d) the solid is optionally subsequently treated with an agent for surface modification.

9. Process according to Claim 8, **characterized in that** in zone 1 the average residence time is from 10 ms to 1 ms and the temperature is from 800 to 1300°C and in zone 2 the average residence time is from 0.1 to 10 s and the temperature is from 400 to 900°C.

10. Process according to Claim 8 or 9, **characterized in that** the silicon compound is selected from the group consisting of SiCl₄, CH₃SiCl₃, (CH₃)₂SiCl₂, (CH₃)₃SiCl, HSiCl₃, (CH₃)₂HSiCl and CH₃C₂H₅SiCl₂, H₄Si, Si(OC₂H₅)₄ and/or Si(OCH₃)₄.

11. Process according to any of Claims 8 to 10, **characterized in that** water or steam is additionally introduced in zone 2.

12. Process according to any of Claims 8 to 11, **characterized in that** the agent for modifying the surface is an organosilane, a silazane or a polysiloxane.

13. Silicone rubber containing the core-shell particles according to any of Claims 1 to 7.

14. Use of the core-shell particles according to any of Claims 1 to 7 as constituent of rubber mixtures, as constituent of polymer preparations, as constituent of adhesive compositions, as constituent of shaped polymer composites which can be obtained by welding in an alternating electromagnetic field, for producing dispersions and for the immobilization of enzymes.

## Revendications

1. Particules à noyau-enveloppe, qui contiennent de l'oxyde de fer dans le noyau et du dioxyde de silicium amorphe dans l'enveloppe, **caractérisées en ce que**
a) l'enveloppe contient 5 à 40% en poids de dioxyde de silicium,
b) le noyau contient
b1) 60 à 95% en poids d'oxyde de fer et
b2) 0,5 à 5% en poids d'au moins un composant de dopage choisi dans le groupe constitué par l'aluminium, le calcium, le cuivre, le magnésium, l'argent, le titane, l'yttrium, le zinc, l'étain et le zirconium,
c) les indications en pour cent en poids se rapportant aux particules à noyau-enveloppe et la somme de a) et b) représentant au moins 98% des particules noyaux-enveloppe,
d) le noyau présentant des distances entre les plans cristallins de 0,20 nm, 0,25 nm et 0,29 nm, à chaque fois ± 0,02 nm, déterminées par microscopie électronique de transmission à haute résolution.

2. Structure de particule à noyau-enveloppe selon la revendication 1, **caractérisée en ce qu'**aucun paramètre attribuable au composant de dopage ne peut être détecté par la diffractométrie des rayons X ou la microscopie électronique de transmission à haute résolution.

3. Particules à noyau-enveloppe selon les revendications 1 ou 2, **caractérisées en ce que** le composant de dopage est l'aluminium ou le zinc.

4. Particules à noyau-enveloppe selon la revendication 3, **caractérisées en ce que** la proportion de composant de dopage est de 1 à 2% en poids, par rapport aux particules à noyau-enveloppe.

5. Particules à noyau-enveloppe selon les revendications 1 à 4, **caractérisées en ce que** le rapport, déterminé par diffractométrie des rayons X, de (magnétite + maghémite) à hématite vaut 70:30 à 95:5 et de magnétite à maghémite vaut 50:50 à 90:10.

6. Particules à noyau-enveloppe selon les revendications 1 à 5, **caractérisées en ce qu'**un ou plusieurs composés, contenant les éléments fer, silicium et oxygène, qui présentent, dans la microscopie électronique de transmission à haute résolution, une distance entre les plans cristallins du réseau de 0,31 ± 0,01 nm, se trouvent entre le noyau et l'enveloppe.

7. Particules à noyau-enveloppe selon les revendications 1 à 6, **caractérisées en ce qu'**elles sont modifiées par adsorption, réaction à la surface ou complexation de ou avec des réactifs inorganiques et organiques.

8. Procédé pour la préparation des particules à noyau-enveloppe selon les revendications 1 à 7, **caractérisé en ce que**
a) dans une première zone d'un réacteur à écoulement, on enflamme et on laisse réagir un mélange contenant
a1) un aérosol obtenu par pulvérisation d'une solution contenant à chaque fois un ou plusieurs composés oxydables et/ou hydrolysables du fer et à chaque fois une ou plusieurs substances de dopage choisies dans le groupe constitué par l'aluminium, le calcium, le cuivre, le magnésium, l'argent, le titane, l'yttrium, le zinc, l'étain et le zirconium,
a2) un ou plusieurs gaz combustibles contenant de l'hydrogène et
a3) un ou plusieurs gaz contenant de l'oxygène,
b) dans une deuxième zone du réacteur à écoulement, on ajoute à ce mélange réactionnel un ou plusieurs composés hydrolysables et/ou oxydables du silicium,
c) on refroidit ensuite le cas échéant le mélange réactionnel et on sépare le solide des substances sous forme de gaz ou sous forme de vapeur et
d) on traite ensuite le cas échéant le solide par un agent pour la modification de surface.

9. Procédé selon la revendication 8, **caractérisé en ce que**, dans la zone 1, le temps de séjour moyen est de 10 ms à 1 s et la température est de 800 à 1300°C et, dans la zone 2, le temps de séjour moyen est de 0,1 à 10 s et la température est de 400 à 900°C.

10. Procédé selon les revendications 8 ou 9, **caractérisé en ce que** le composé de silicium est choisi dans le groupe constitué par SiCl₄, CH₃SiCl₃, (CH₃)₂SiCl₂, (CH₃)₃SiCl, HSiCl₃, (CH₃)₂HSiCl et CH₃C₂H₅SiCl₂, H₄Si, Si(OC₂H₅)₄ et/ou Si(OCH₃)₄.

11. Procédé selon les revendications 8 à 10, **caractérisé en ce que** de l'eau ou de la vapeur d'eau est en outre introduite dans la zone 2.

12. Procédé selon les revendications 8 à 11, **caractérisé en ce que** l'agent pour la modification de surface est un organosilane, un silazane ou un polysiloxane.

13. Utilisation de caoutchouc de silicone contenant les particules à noyau-enveloppe selon les revendications 1 à 7.

14. Utilisation des particules à noyau-enveloppe selon les revendications 1 à 7 comme constituant de mélanges de caoutchouc, comme constituant de préparations polymères, comme constituant de compositions adhésives, comme constituant de corps façonnés composites en matériau synthétique pouvant être obtenus par soudage dans un champ alternatif électromagnétique, pour la préparation de dispersions et pour l'immobilisation d'enzymes.
